# EUROPÄISCHE PATENTSCHRIFT

(11) **EP 1 157 915 B1**
(45) Veröffentlichungstag und Bekanntmachung des Hinweises auf die Patenterteilung: **31.05.2006**
(21) Anmeldenummer: 01111965.8
(22) Anmeldetag: 21.05.2001
(51) Int. Cl.: B62D 6/00, B62D 5/06, B62D 101/00, B62D 137/00

(54) **Verfahren zum Steuern des Lenkwinkels eines Fahrzeugs sowie System zur Durchführung des Verfahrens**
Method for controlling the steering angle of a vehicle and system for performing such a method
Procédé de commande de l'angle de direction d'un véhicule et un système pour exécuter un tel procédé

(30) Priorität: 26.05.2000 DE 10026132
(43) Veröffentlichungstag der Anmeldung: 28.11.2001
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas

(56) Entgegenhaltungen:
- EP-A- 0 970 875
- DE-A- 19 725 656
- US-A- 5 540 298

## Beschreibung

Die Erfindung betrifft ein Verfahren zum Steuern des Lenkwinkels eines Fahrzeugs und ein System zur Durchführung des Verfahrens.

Aus der DE 197 02 313 C1 ist ein Verfahren zum Steuern des Lenkwinkels eines Fahrzeugs bekannt, welches das sogenannte Steering-by-Wire zum Gegenstand hat. Dabei ist das Lenkorgan, üblicherweise das Fahrzeuglenkrad, nicht mechanisch starr mit den Rädern des Fahrzeugs gekoppelt. Vielmehr ist eine Steuereinheit zwischengeschaltet, die abhängig vom Signal, welches vom Steuerorgan ausgeht, bestimmte Stellantriebe betätigt, die den Lenkwinkel ändern. Das Ausmaß der Änderung des Lenkwinkels kann dabei auch abhängig von der Fahrzeuggeschwindigkeit sein, d.h. derselbe Lenkeinschlag am Lenkorgan führt bei unterschiedlichen Geschwindigkeiten zu unterschiedlichen Lenkwinkeln oder Lenkwinkelveränderungen, so daß ein Fahrzeug bei schneller Fahrt relativ träge auf Lenkeinschläge reagiert. Eine solche Ausgestaltung ist auch aus der US 5,540,299,298 A bekannt. Dies hat folgenden Nachteil: muß plötzlich einem unvermittelt auftauchenden Hindernis ausgewichen werden, z.B. einem auf die Fahrbahn springenden Tier, reagiert das Fahrzeug auf die abrupten großen Lenkeinschläge zu träge.

Die für das erfindungsgemäße System gattungsbildende EP 0 970 875 A2 zeigt ein Lenksystem, das einen Lenkeinschlag in Richtung eines Hindernisses erschwert oder verhindert. Eine auf das Lenkrad einwirkende, von einem Handkraftsteller erzeugte Gegenlenkkraft wird z.B. erhöht, um ein Einschlagen des Lenkrades zu erschweren oder zu verhindern. Auch kann die Übertragung eines Betätigungssignals, das beim Einschlagen des Lenkrades an einen Stellantrieb gesendet wird, verhindert werden, so daß ein Einschlagen des Lenkrades keine Richtungsänderung zur Folge hat.

Die DE 197 25 656 Al zeigt ein Sicherheitsüberholsystem mit Sensoren, die einen Abstand zu einem herannahenden Fahrzeug messen, und eine Berechnungseinrichtung, die einen zum Überholen eines vorausfahrenden Fahrzeugs notwendigen Weg bestimmt. Falls der Fahrzeuglenker ein Überholmanöver durchführen will, bei dem der vorhandene Überholweg zu kurz ist, wird die Lenkung gesperrt, so daß kein Ausscheren auf die Gegenfahrbahn möglich ist.

Die Erfindung schafft ein Verfahren zum Steuern des Lenkwinkels eines Fahrzeugs und ein zur Durchführung des Verfahrens geeignetes System, welche einen hohen Komfort bei unterschiedlichen Fahrzeuggeschwindigkeiten sowie hohe Fahrzeugsicherheit auch bei plötzlich auftretenden Hindernissen bieten. Das erfindungsgemäße Verfahren sieht hierzu folgende Schritte vor:
- Eine Steuereinheit steuert bei Veränderung der Stellung des Lenkorgans einen Stellantrieb zur Veränderung des Lenkwinkels,
- wobei das Ausmaß der Veränderung des Lenkwinkels größer ist, wenn ein Hindernis für ein Falszeug über einen mit der Steuereinheit gekoppelten Abstandsmesser detektiert wird, als wenn kein Hindernis für das Fahrzeug detektiert wird

Das erfindungsgemäße Verfahren sieht vor, daß bei einem plötzlich auftretenden Hindernis trotz beispielsweise hoher Geschwindigkeit eine Lenkwinkeländerung möglich ist, die wesentlich höher ist als die Lenkwinkeländerung bei normaler Fahrt, d.h. ohne Hindernis. Mittels des Verfahrens kann also in Extremsituationen eine unmittelbarere Lenkung des Fahrzeugs erreicht werden. Damit ist es möglich, in Extremsituationen einem Hindernis noch auszuweichen, was bei den bislang angedachten Verfahren nicht möglich wäre.

Gemäß einer Ausgestaltung der Erfindung ist die quantitative Veränderung des Lenkwinkels (d.h. das Ausmaß der Lenkwinkeländerung für eine bestimmte Veränderung der Stellung des Lenkorgans) von der Zeit abhängig, bis zu der das Fahrzeug auf das Hindernis treffen würde. Das bedeutet konkret, bei gleichem Lenkeinschlag des Lenkorgans sorgt die Steuereinheit für unterschiedliche Lenkwinkel an den Rädern selbst, abhängig davon, wie zeitlich nahe eine Kollision mit dem Hindernis bevorsteht. Somit soll das Risiko einer Kollision bestimmt werden und in den Lenkwinkel einfließen. Bei gleichem Einschlag des Lenkorgans würde die Steuereinheit beispielsweise für einen geringeren Lenkwinkel sorgen, wenn die Kollision mit dem Hindernis noch eine Sekunde bevorsteht als in dem Fall, in dem die Kollision nur noch wenige Zehntelsekunden bevorsteht.

Eine weitere Möglichkeit, die Wahrscheinlichkeit der Kollision mit dem Hindernis zu bestimmen, besteht darin, die quantitative Veränderung des Lenkwinkels von der Relativgeschwindigkeit zwischen Fahrzeug und Hindernis abhängig zu machen.

Gemäß der bevorzugten Ausführungsform ändert die Steuereinheit den Lenkwinkel auch in Abhängigkeit von der Fahrzeuggeschwindigkeit quantitativ. Dies bedeutet, wie zuvor bereits erläutert, daß der gleiche Lenkeinschlag am Lenkorgan bei höheren Geschwindigkeiten zu einer wesentlich geringeren Lenkwinkeländerung als bei niedrigen Geschwindigkeiten sorgt. Die Extreme sind beispielsweise hohe Geschwindigkeit auf Autobahnen und niedrige Geschwindigkeiten, aber hohe Lenkwinkeländerungen, z.B. beim Einparken des Fahrzeugs. Durch die Geschwindigkeitsabhängigkeit wird dafür gesorgt, daß beim Einparken große Lenkwinkeländerungen bei relativ geringen Lenkeinschlägen möglich sind und das Fahrzeug bei Höchstgeschwindigkeit nicht nervös wirkt, auf kleine Lenkeinschläge reagiert.

Eine weitere Ausgestaltung des Verfahrens sieht vor, daß in die Steuereinheit ein sogenanntes ESP-System (elektronisches Stabilisierungsprogramm) integriert ist. Damit ist die Änderung des Lenkwinkels auch von Fahrzeugumgebungsbedingungen abhängig (insbesondere dem Reibwert zwischen Rädern und Fahrbahn), wodurch verhindert werden soll, daß die bei hohen Geschwindigkeiten möglichen Lenkwinkeleinschläge zum Schleudern des Fahrzeugs führen.

Die Erfindung schafft darüber hinaus ein entsprechend dem Verfahren arbeitendes System zur Steuerung des Lenkwinkels des Fahrzeugs.

Vorzugsweise ist das System auch noch mit einem Geschwindigkeitssensor ausgestattet, der mit der Steuereinheit gekoppelt ist, damit eine fahrzeuggeschwindigkeitsabhängige Lenkung möglich wird.

Vorteilhafterweise ist das Lenkorgan elektrisch mit der Steuereinheit gekoppelt. Darüber hinaus sieht die Erfindung in einer Ausführungsform vor, daß in das System eine ESP-Steuerung integriert ist.

Weitere Merkmale und Vorteile der Erfindung ergeben sich aus der nachfolgenden Beschreibung und der nachfolgenden Zeichnung, auf die Bezug genommen wird.

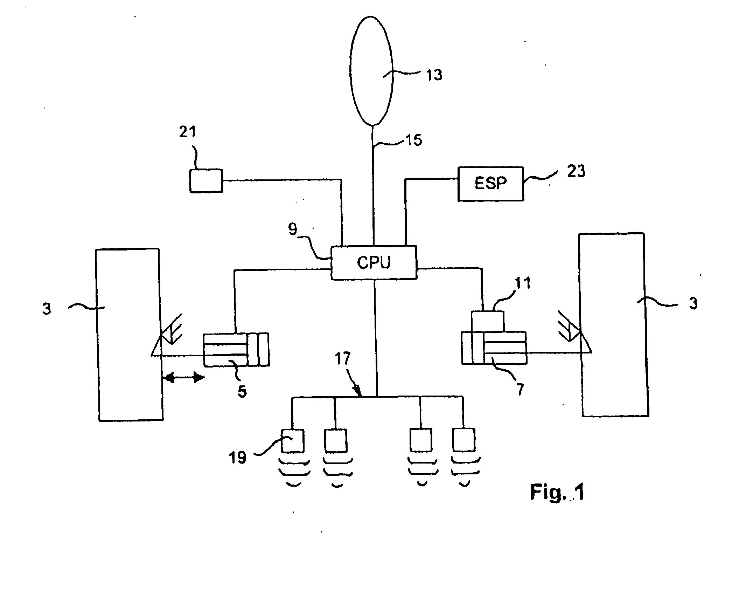

Fig. 1 zeigt eine schematische Ansicht des erfindungsgemäßen Systems zur Durchführung des erfindungsgemäßen Verfahrens.

In Fig. 1 ist ein System zur Steuerung des Lenkwinkels eines Fahrzeugs dargestellt, wobei das Fahrzeug durch zwei Vorderräder 3 symbolisiert ist. Das System weist für jedes Rad 3 einen eigenen Stellantrieb auf, der beispielsweise ein elektrischer Stellantrieb 5 oder ein pneumatischer oder hydraulischer Stellantrieb 7 sein kann. Über die Stellantriebe wird der Lenkwinkel jedes Rades 3 gesteuert. Die Stellantriebe 5, 7 werden durch eine zentrale Steuereinheit 9 betätigt und gesteuert, die ebenfalls Teil des Systems ist. Mit 11 ist ein Ventil bezeichnet, das den hydraulischen Stellantrieb 7 betätigt. Die zentrale Steuereinheit ist mit einem vom Fahrer betätigbaren Lenkorgan 13 elektrisch gekoppelt, wobei das Lenkorgan 13 ein Lenkrad oder auch eine andere Einrichtung, z.B. ein Joy-Stick sein kann, mit dem das Fahrzeug gelenkt werden kann. Die elektrische Koppelung von Lenkorgan 13 und Steuereinheit 9 wird durch eine elektrische Leitung 15 symbolisiert.

Die Steuereinheit 9 ist darüber hinaus mit einem Abstandsmesser 17 elektrisch gekoppelt, der aus zahlreichen, im Bereich der Stoßstange des Fahrzeugs untergebrachten Sensoren 19 besteht. Die Sensoren 19 sind Teil eines Abstandsradars, der den Abstandsmesser 17 bildet. Neben dem Abstandsmesser 17 gehört auch ein Fahrzeuggeschwindigkeitssensor 21, der beispielsweise in der Nähe der Hinterachse des Fahrzeugs angebracht ist, zum System zur Steuerung des Lenkwinkels. Optional kann das System auch mit einem sogenannten ESP-Steuersystem 23 versehen sein, das Teil der Steuereinheit 9 oder mit dieser gekoppelt sein kann.

Das erfindungsgemäße System arbeitet folgendermaßen. Der Lenkwinkel der Räder 3 wird im Fahrbetrieb durch das Lenkorgan 13 gesteuert. Über nicht gezeigte Sensoren wird die Stellung des Lenkorgans 13 und/oder die Veränderung der Stellung des Lenkorgans 13 abgetastet, und entsprechende Signale werden über die Leitung 15 zur Steuereinheit 9 gesandt. Zeitlich parallel hierzu wird ein vom Geschwindigkeitssensor 21 erzeugtes Signal, das charakteristisch für die augenblickliche Geschwindigkeit ist, ebenfalls an die Steuereinheit 9 übermittelt. Die Steuereinheit 9 hat beispielsweise mehrere Kennfelder abgespeichert und bestimmt aufgrund der eingehenden Daten den einzustellenden Lenkwinkel und steuert die Stellantriebe 5, 7 entsprechend an, damit sich der gewünschte Ist-Lenkwinkel ergibt.

Die Steuereinheit steuert den Lenkwinkel dabei geschwindigkeitsabhängig, was bedeutet, daß bei gleichem Lenkeinschlag am Steuerorgan 13 bei niedrigen Geschwindigkeiten ein deutlich höherer Lenkwinkel eingestellt wird als bei höheren Geschwindigkeiten. Bei der Fahrzeughöchstgeschwindigkeit sind kaum noch große Lenkwinkeländerungen möglich, so daß der Fahrer entspannter reisen kann.

Der Abstandsmesser 17 ermittelt während des Fahrbetriebs laufend, ob das Fahrzeug auf ein Hindernis zufährt. Abstandsmesser 17 und Steuereinheit 9 ermitteln dabei auch, ob sich der Gegenstand mit dem Fahrzeug bewegt (voraussichtlich ein vor dem Fahrzeug fahrendes anderes Fahrzeug) oder ob Fahrzeug und Gegenstand aufeinander zukommen und der Gegenstand damit ein Hindernis für das Fahrzeug bildet, mit welchem das Fahrzeug voraussichtlich kollidieren wird.

Wenn aufgrund der Geschwindigkeit des Fahrzeugs relativ zum Hindernis und des Abstandes des Fahrzeugs zum Hindernis von einer Kollision des Fahrzeugs ausgegangen werden muß, sorgt die Steuereinheit 9 für eine unmittelbarere Lenkung, als dies ohne das detektierte Hindernis während des normalen Fahrbetriebs der Fall wäre. Das heißt, bei starkem Lenkeinschlag wird auch eine starke Änderung des Lenkwinkels erlaubt, wie sie ansonsten bei der entsprechenden Fahrgeschwindigkeit nicht zugelassen werden würde. Damit soll dem Fahrer die Möglichkeit gegeben werden, am Hindernis vorbeizufahren.

Es ist auch möglich, die quantitative Veränderung des Lenkwinkels von der Zeit abhängig zu machen, bis zu der das Fahrzeug auf das Hindernis treffen würde. Besteht beispielsweise noch genügend Zeit, um am Hindernis vorbeizufahren, so könnte die Steuereinheit 9 einen geringeren Lenkwinkel einstellen als bei einem unmittelbar vor dem Fahrzeug auf die Fahrbahn geratenden Hindernis. Auch von der Relativgeschwindigkeit zwischen Fahrzeug und Hindernis kann die quantitative Veränderung des Lenkwinkels abhängig sein.

Das ESP-Steuersystem 23 wiederum sorgt dafür, daß der von der Steuereinheit 9 zugelassene Lenkwinkel auch von den Umgebungsbedingungen abhängig ist. Würde beispielsweise die Steuereinheit einen großen Lenkwinkel einstellen, um dem unmittelbar vor dem Fahrzeug auftauchenden Hindernis zu entgehen, und würde das Fahrzeug aber bei diesem Lenkwinkel ins Schleudern geraten, so würde der maximale Lenkwinkel eingestellt werden, bei dem das Fahrzeug noch nicht ins Schleudern gerät. Die ESP-Steuerung kann auch mit dem Antriebs- oder Bremssystem in Verbindung stehen und das Abbremsen des Fahrzeugs steuern.

## Patentansprüche

1. Verfahren zum Steuern des Lenkwinkels eines Fahrzeugs, **gekennzeichnet** mit folgenden Schritten
- eine Steuereinheit (9) steuert bei Veränderung der Stellung eines Lenkorgans (13) einen Stellantrieb (5, 7) zur Veränderung des Lenkwinkels,
- **dadurch gekennzeichnet, daß** das Ausmaß der Veränderung des Lenkwinkels größer ist, wenn ein Hindernis für ein Fahrzeug von einem mit der Steuereinheit (9) gekoppelten Abstandsmesser (17) detektiert wird, als wenn kein Hindernis detektiert wird.

2. Verfahren nach Anspruch 1, **dadurch gekennzeichnet, daß** die Veränderung des Lenkwinkels von der Zeit bis zum Auftreffen des Fahrzeugs auf das Hindernis abhängig ist.

3. Verfahren nach Anspruch 1 oder 2, **dadurch gekennzeichnet, daß** die quantitative Veränderung des Lenkwinkels von der Relativgeschwindigkeit zwischen Fahrzeug und Hindernis abhängig ist.

4. Verfahren nach einem der vorhergehenden Ansprüche, **dadurch gekennzeichnet, daß** die Steuereinheit (9) den Lenkwinkel auch in Abhängigkeit von der Fahrzeuggeschwindigkeit quantitativ ändert.

5. Verfahren nach einem der vorhergehenden Ansprüche, **dadurch gekennzeichnet, daß** in der Steuereinheit (9) verschiedene Kennfelder abgespeichert sind, die für den Einfluß verschiedener Faktoren auf die Lenkwinkeländerung charakteristisch sind.

6. System zur Durchführung des Verfahrens nach einem der vorhergehenden Ansprüche, mit
einem vom Fahrer betätigbaren Lenkorgan (13),
einer mit dem Lenkorgan (13) gekoppelten Steuereinheit (9),
wenigstens einem Stellantrieb (5, 7), der mit der Steuereinheit (9) gekoppelt und von ihr gesteuert wird, und
mit einem Abstandsmesser (17), der mit der Steuereinheit (9) gekoppelt ist und der Hindernisse detektiert,
**dadurch gekennzeichnet, daß** die Steuereinheit (9), die bei Veränderung der Stellung des Lenkorgans (13) den Stellantrieb (5, 7) zur Veränderung des Lenkwinkels steuert, so ausgebildet ist, daß sie eine größere Veränderung des Lenkwinkels herbeiführt, wenn ein Hindernis für ein Fahrzeug von dem mit der Steuereinheit (9) gekoppelten Abstandsmesser (17) detektiert wird, als wenn kein Hindernis detektiert wird.

7. System nach Anspruch 6, **gekennzeichnet durch** einen mit der Steuereinheit (9) gekoppelten Geschwindigkeitssensor (21).

8. System nach Anspruch 6 oder 7, **dadurch gekennzeichnet, daß** das Lenkorgan (13) elektrisch mit der Steuereinheit (9) gekoppelt ist.

9. System nach einem der Ansprüche 6 bis 8, **dadurch gekennzeichnet, daß** das System mit einem elektronischen Stabilisierungssystem (ESP) gekoppelt ist.

## Claims

1. A method of controlling the steering angle of a vehicle, comprising the following steps:
- a control unit (9) controls an actuating drive (5, 7) to alter the steering angle upon a change in the position of a steering member (13), **characterized in that**:
- the extent of the alteration to the steering angle is greater in the case where an obstacle for a vehicle is detected by a distance meter (17) coupled with the control unit (9) than in the case where no obstacle is detected.

2. The method according to Claim 1, **characterized in that** the alteration to the steering angle is dependent on the time up to the impact of the vehicle onto the obstacle.

3. The method according to Claim 1 or 2, **characterized in that** the quantitative alteration to the steering angle is dependent on the relative speed between the vehicle and the obstacle.

4. The method according to any of the preceding claims, **characterized in that** the control unit (9) also alters the steering angle quantitatively as a function of the vehicle speed.

5. The method according to any of the preceding claims, **characterized in that** various characteristic diagrams are stored in the control unit (9), which are characteristic of the influence of various factors on the alteration to the steering angle.

6. A system for carrying out the method according to any of the preceding claims, comprising
a steering member (13) adapted to be actuated by the driver,
a control unit (9) coupled with the steering member (13),
at least one actuating drive (5, 7) coupled with and controlled by the control unit (9), and
a distance meter (17) which is coupled with the control unit (9) and which detects obstacles,
**characterized in that** the control unit (9), which controls the actuating drive (5, 7) to alter the steering angle upon a change in the position of the steering member (13), is designed in such a way that it causes the alteration to the steering angle to be greater in the case where an obstacle for a vehicle is detected by the distance meter (17) coupled with the control unit (9) than in the case where no obstacle is detected.

7. The system according to Claim 6, **characterized by** a speed sensor (21) coupled with the control unit (9).

8. The system according to Claim 6 or 7, **characterized in that** the steering member (13) is electrically coupled with the control unit (9).

9. The system according to any of Claims 6 to 8, **characterized in that** the system is coupled with an electronic stabilizing system (ESP).

## Revendications

1. Procédé de commande de l'angle de direction d'un véhicule, présentant les étapes suivantes :
- une unité de commande (9) commande un actionneur (5, 7) lors d'une modification de la position d'un organe de direction (13), pour modifier l'angle de direction, **caractérisée en ce que** :
- l'étendue de la modification de l'angle de direction est plus grande lorsqu'un obstacle pour un véhicule est détecté par un mesureur de distance (17) couplé à l'unité de commande (9) que lorsque aucun obstacle n'est détecté.

2. Procédé selon la revendication 1, **caractérisé en ce que** la modification de l'angle de direction dépend du temps s'écoulant jusqu'à l'impact du véhicule sur l'obstacle.

3. Procédé selon la revendication 1 ou 2, **caractérisé en ce que** la modification quantitative de l'angle de direction dépend de la vitesse relative entre le véhicule et l'obstacle.

4. Procédé selon l'une des revendications précédentes, **caractérisé en ce que** l'unité de commande (9) modifie l'angle de direction aussi quantitativement en fonction de la vitesse du véhicule,

5. Procédé selon l'une des revendications précédentes, **caractérisé en ce que** dans l'unité de commande (9) sont mémorisés différents diagrammes caractéristiques qui sont caractéristiques pour l'influence de différents facteurs sur la modification de l'angle de direction.

6. Système de mise en oeuvre du procédé selon l'une des revendications précédentes, comportant
un organe de direction (13) qui peut être actionné par le conducteur,
une unité de commande (9) couplée à l'organe de direction (13),
au moins un actionneur (5, 7) qui est couplé à l'unité de commande (9) et commandé par celle-ci, et
un mesureur de distance (17) qui est couplé à l'unité de commande (9) et qui détecte les obstacles,
**caractérisé en ce que** l'unité de commande (9) qui, en cas de modification de la position de l'organe (13), commande l'actionneur (5, 7) pour modifier l'angle de direction, est réalisée de telle sorte qu'elle provoque une modification plus importante de l'angle de direction (9) lorsqu'un obstacle pour un véhicule est détecté par le mesureur de distance (17) couplé à l'unité de commande (9) que lorsque aucun obstacle n'est détecté.

7. Système selon la revendication 6, **caractérisé par** un capteur de vitesse (21) couplé à l'unité de commande (9).

8. Système selon la revendication 6 ou 7, **caractérisé en ce que** l'organe de direction (13) est couplé électriquement à l'unité de commande (9).

9. Système selon l'une des revendications 6 à 8, **caractérisé en ce que** le système est couplé à un système de stabilisation électronique (ESP).
